# EUROPÄISCHE PATENTSCHRIFT

(11) **EP 3 014 993 B1**
(45) Veröffentlichungstag und Bekanntmachung des Hinweises auf die Patenterteilung: **25.11.2020**
(21) Anmeldenummer: 15401104.3
(22) Anmeldetag: 15.10.2015
(51) Int. Cl.: A01M 7/00, A01B 69/00

(54) **SYSTEM ZUR STEUERUNG DER VERTEILUNG VON LANDWIRTSCHAFTLICHEM GUT**
SYSTEM FOR CONTROLLING THE DISTRIBUTION OF AGRICULTURAL PRODUCTS
SYSTEME DE COMMANDE DE LA DISTRIBUTION DES PRODUITS AGRICOLES

(30) Priorität: 27.10.2014 DE 102014115560
(43) Veröffentlichungstag der Anmeldung: 04.05.2016
(73) Patentinhaber: Amazonen-Werke H. Dreyer GmbH & Co. KG, 49205 Hasbergen (DE)
(72) Erfinder: Kühn, Christoph, 49080 Osnabrück (DE); Konermann, Thomas, 49479 Ibbenbüren (DE); Heer, Jochen, 49078 Osnabrück (DE)

(56) Entgegenhaltungen:
- EP-A1- 0 726 024
- WO-A1-2012/015957
- US-A1- 2013 030 565

## Beschreibung

Die Erfindung betrifft ein System zur Steuerung der Verteilung von landwirtschaftlichem Gut aus einem Vorratsbehälter gemäß des Oberbegriffs von Anspruch 1 und ein entsprechendes Verfahren gemäß des Oberbegriffs von Anspruch 6.

Systeme zur Steuerung einer Maschine zur Verteilung von landwirtschaftlichem Gut sind aus den Druckschriften US 2013/030565 A1, EP 0 726 024 A1 und WO 2012/015957 A1 bekannt.

Der in der Landtechnik vorherrschende Trend zur Prozessoptimierung, also insbesondere zur Zeitersparnis, Ressourcenschonung und Automatisierung im Hinblick auf die Arbeit mit Verteilmaschinen zu einer zunehmenden Vergrößerung der Arbeitsbreite, Fahrgeschwindigkeit und zusätzlich einer immer intensiveren Automatisierung mittels Position bestimmender Instrumente, wie beispielsweise GPS.

So ist das positionsgenaue Schalten einzelner Teilbreiten bei Feldspritzen, Sämaschinen und Düngerstreuern mittels GPS-Systemen seit geraumer Zeit Stand der Technik. Eine Weiterbildung dieser Technik nach EP 2 752 114 A1 nutzt GPS zur vorausschauenden Steuerung der Höhenlage eines Verteilergestänges im oder in der Nähe des Vorgewendes, insbesondere um ein rechtzeitiges Absenken des Verteilergestänges, welches einige Sekunden dauern kann, auf die gewünschte Ausbringhöhe der Düsen über dem Pflanzenbestand zu erreichen, bevor die Verteildüsen aktiviert werden. Somit wird das Ausbringen des Pflanzenschutzmittels beim Anschalten der Verteildüsen direkt in der gewünschten Höhe vorgenommen.

Die zunehmende Vergrößerung der Arbeitsbreiten und die unter anderem dadurch bedingte Vergrößerung von Tanks und Vorratsbehältern geht mit einer Verlängerung von Rohr- und Schlauchleitungssystemen einher und verursacht somit eine immer größer werdende Verzögerungszeit der Ausbringung des landwirtschaftlichen Guts nach dem Anschalten der Fördereinrichtung, beispielsweise der Pumpe, welche ein Pflanzenschutzmittel von dem Tank einer Pflanzenschutzspritze zu den Ausbringdüsen fördert. Dieser mehrere Sekunden dauernde Prozess, welcher zunehmend ebenso bei Sämaschinen oder Düngerstreuern beobachtet werden kann, kann in der Praxis dazu führen, dass nach dem Anschalten oder dem neu Einregeln der Fördermenge einer Förderpumpe oder einer anderen Fördereinrichtung auf der landwirtschaftlichen Fläche in Fahrtrichtung etliche Meter eine zu intensive, zu niedrige oder auch gar keine Behandlung mit landwirtschaftlichem Gut erfahren.

Aufgabe der vorliegenden Erfindung ist es entsprechend ein System sowie ein Verfahren zu schaffen, welches die Nachteile des Standes der Technik behebt und in vorteilhafter Weise eine Überbehandlung oder Unterbehandlung einer landwirtschaftlichen Fläche durch Anfahreffekte von Fördereinrichtungen vermindert und/oder verhindert.

Dies wird durch ein System zur Steuerung der Verteilung von landwirtschaftlichem Gut aus einem Vorratsbehälter gemäß dem Anspruch 1 erreicht. Auf diese Weise kann vorausschauend der Verteilprozess durch einen prozessvorbereitenden Vorgang vorbereitet und damit ohne Zeitverzögerung gestartet und/oder geändert und/oder beendet werden, so dass keine oder nur minimale Fehlbehandlungen vorgenommen werden.

In einer vorteilhaften Ausgestaltung der Erfindung wird während eines Regelungsvorganges als prozessvorbereitender Vorgang eine die Sollmenge und/oder Sollrate bestimmende Größe, vorzugsweise eine Pumpendrehzahl und/oder eine Ventilstellung und/oder eine Dosierschieberstellung, an Hand einer Eingangsgröße eingestellt, wobei letztere bei geschlossenem, zumindest einem Ausbringorgan zur Ausbringung des landwirtschaftlichen Guts ein Maß für die Ausbringmenge und/oder Ausbringrate nach Öffnen des zumindest einen Ausbringorgans darstellt. Auf diese Weise kann bei geschlossenen Ausbringorganen präzise auf eine Ausbringmenge geregelt werden, welche anschließend nach dem Öffnen derselben unmittelbar an den Ausbringorganen ansteht.

In einer vorteilhaften Weiterbildung der Erfindung wird für die automatische Einstellung zumindest einer Dosiervorrichtung, vorzugsweise die Regelung einer Ventilstellung und/oder die Positionierung eines Dosierschiebers, als prozessvorbereitender Vorgang die Stellung der zumindest einen Dosiervorrichtung elektronisch und/oder optisch und/oder mechanisch erfasst und an Hand der Stellung der zumindest einen Dosiervorrichtung entsprechend einer hinterlegten Rechenvorschrift, eines Graphen und/oder einer Tabelle die Durchflussrate einer Stellung der zumindest einen Dosiervorrichtung zugeordnet. Auf diese Weise kann vorteilhaft die Stellung der für die Steuerung der Ausbringmenge erforderlichen Dosiervorrichtung erfasst und eingestellt werden. Dies kann mit hoher Geschwindigkeit geschehen, da für die Einstellung der Dosiervorrichtung als prozessvorbereitender Vorgang die Ausbringmenge nicht exakt getroffen werden muss. Somit kann eine zeitraubende Regelung der Stellung der Dosiervorrichtung mittels der Messwerte eines Mengenzählers, beispielsweise eines Durchflussmessers, in einem ersten Schritt unterbleiben. Nach dem ungefähren Einstellen der Dosiervorrichtung an Hand der Stellung kann eine genaue Regelung auf Basis der Messwerte des Mengenzählers vorgenommen werden, wie es im Normalbetrieb der Verteilmaschine vorgesehen ist.

In einer vorteilhaften Weiterbildung der Erfindung wird zur Durchführung des prozessvorbereitenden Vorganges die automatische Einstellung zumindest einer Dosiervorrichtung, vorzugsweise die Regelung einer Ventilstellung und/oder die Positionierung eines Dosierschiebers, anhand der Messwerte zumindest eines Mengenzählers, vorzugsweise eines Durchflussmessers und/oder eines Körnerzählers, durchgeführt und das vorzeitige Ausbringen des Gutes verhindert, indem das Gut mittels zumindest einer, vorzugsweise automatisch, schaltbaren Weiche nach Passieren des zumindest einen Mengenzählers in den Vorratsbehälter befördert wird. In dieser Ausgestaltung kann der prozessvorbereitende Vorgang in einem im Vergleich zur obigen Lösung langwierigeren Regelprozess realisiert werden, da mittels einer Weiche verhindert wird, dass das auszubringende Gut vorzeitig auf die landwirtschaftliche Fläche gelangt. Diese Weiche kann als im Vergleich zur Einstellung des Dosierschiebers schnell schaltendes Bauteil ausgestaltet sein. Somit kann auch am Feldende und/oder vor der Einfahrt ins Vorgewende durch Schließen der Weiche das Ausbringen schnell gestoppt werden.

In einer weiteren vorteilhaften Ausgestaltung der Erfindung für eine Feldspritze wird für zumindest eine spezifische Ventilstellung und damit Sollausbringmenge mittels einer Drucksonde im Flüssigkeitskreislauf zumindest ein Druck bei geschlossenen Düsen zur Ausbringung des Spritzmittels ermittelt, so dass zur Durchführung eines prozessvorbreitenden Vorganges das Ventil bei geschlossenen Düsen derart eingestellt wird, dass der zuvor ermittelte Druck bei geschlossenen Düsen erreicht wird und sich bei Öffnen der Düsen zumindest annähernd die entsprechende Sollausbringmenge automatisch einstellt. Auf diese Weise kann die nach dem Aktivieren der Düsen auszubringende Menge vorzeitig über den Druck im Leitungssystem eingestellt werden, so dass beim Öffnen der Düsen zumindest annähernd die Sollausbringmenge schnell anliegt. Anschließend kann wie üblich die tatsächliche Ausbringmenge beispielsweise über Mengenzähler detektiert und geregelt werden.

Die Steuerung der Verteilung von landwirtschaftlichem Gut aus einem Vorratsbehälter wird durch ein Verfahren gemäß dem Anspruch 6 erreicht. Durch dieses Verfahren wird in vorteilhafter Weise die auszubringende Menge landwirtschaftlichen Guts vorausschauend eingeregelt, so dass das Ausbringen bzw. die Änderung der Ausbringmenge ohne Verzögerung stattfinden kann.

Das vorgestellte System sowie Verfahren kann in vorteilhafter Weise für Mengensteuerung bei Düngerstreuern, Pflanzenschutzspritzen und Sämaschinen eingesetzt werden. Optimierungen sind durch die vorausschauende Einstellung der Dosiervorrichtungen zum einen hinsichtlich zu erwartender Verzögerungen im Hinblick auf lange Förderstrecken, wie Rohr- und Schlauchleitungen zu erwarten. Zudem kann durch die rechtzeitige und/oder beschleunigte Einstellung der Dosiermittel beispielsweise an Hand der Ventilstellung statt eines langwierigen Regelungsprozesses auf Basis einer Mengenzählung mittels eines Durchflussmessers oder mittels Einsatz einer zusätzlichen Weiche eine beschleunigte zumindest annähernde Einstellung des Sollwertes erreicht werden.

Die vorausschauende Einleitung und Durchführung des prozessvorbereitenden Vorganges wird mittels sogenannter virtueller Teilbreiten, vorzugsweise mit Hilfe sogenannter Data Dictionary Identifier im Rahmen der Isobusnorm ISO 11783,erreicht werden. Derartige Teilbreiten werden bei einer Feldspritze oder einer Sämaschine vorzugsweise den jeweiligen Ausbringaggregaten, wie beispielsweise Spritzdüsen oder Säscharen, zugeordnet, wobei auch immer mehrere dieser Aggregate zu einer Teilbreite zusammengefasst werden können. Beim Düngerstreuer wird vorzugsweise die Arbeitsbreite in eine festgelegte Anzahl von Teilbreiten eingeteilt, welche dann, wie bei Feldspritze und Sämaschine, durch Änderung der Verteilcharakteristik an- oder abgeschaltet werden können. Diese Teilbreiten bewegen sich gemäß der geometrischen Abmessungen und der Verteilcharakteristik der landwirtschaftlichen Maschine und des empfangenen positionsbestimmenden Signals über die landwirtschaftliche Fläche, so dass die bearbeitete Fläche erfasst werden kann. Zusätzlich wird die aktuelle Position der Teilbreiten und auch die bearbeitete Fläche typischerweise auf einer Anzeigevorrichtung dem Bedienpersonal der landwirtschaftlichen Verteilmaschine angezeigt. Für die vorliegende Erfindung können derartige virtuelle Teilbreiten verwendet werden, um Änderungen der Verteilcharakteristik, also das An- und Abschalten einzelner Teilbreiten oder der ganzen Maschine frühzeitig zu detektieren damit prozessvorbereitende Vorgänge rechtzeitig eingeleitet werden können. Hier werden die virtuellen Teilbreiten in Fahrtrichtung in einem festgelegten Abstand, vorzugsweise Zeitabstand, vorder eigentlichen realen Position der Teilbreite platziert. Um einen konstanten Zeitabstand zu generieren kann der Abstand zwischen virtueller und realer Teilbreite geschwindigkeitsabhängig dynamisch angepasst werden, so dass bei konstanter Geschwindigkeit die Zeit, welche zwischen dem Passieren einer festen Position durch virtuelle und reale Teilbreite vergeht, konstant ist. Auch kann der Lenkeinschlag des Zugfahrzeugs der landwirtschaftlichen Verteilmaschine für die Platzierung der virtuellen Teilbreiten berücksichtigt werden. Der (Zeit-)Abstand zwischen virtuellen und realen Teilbreiten orientiert sich sinnvoller Weise an den Zeiträumen, welche für die An- und Abschaltvorgänge der Förderung des landwirtschaftlichen Gutes, also insbesondere der Länge der Rohr- und/oder Schlauchleitungen und/oder den Zeiträumen, welche für die Mengenregelung benötigt werden. Passiert eine virtuelle Teilbreite nun eine Position während der Fahrt über die landwirtschaftliche Fläche einen Ort, an dem sich die Verteilcharakteristik ändert, also beispielsweise die Teilbreite an- oder abgeschaltet wird, so kann nun der prozessvorbereitende Vorgang eingeleitet werden. Beispielsweise kann nun wenn bei der Fahrt aus dem Vorgewende die Verteilung gestartet werden soll der Druck in der Förderleitung entsprechend der auszubringenden Sollmenge erhöht werden, so dass bei Aktivierung der Ausbringdüsen unmittelbar oder nach sehr kurzer Zeit bereits zumindest annähernd die Sollmenge ausgebracht wird.

Weitere Einzelheiten der Erfindung sind weiteren Unteransprüchen, der Beispielsbeschreibung und den Zeichnungen zu entnehmen. Hierbei zeigen
- Fig.1: eine Feldspritze auf einer landwirtschaftlichen Fläche in schematischer Darstellung,
- Fig.2: eine mögliche Art der Regelung nach dem erfindungsgemäßen Prinzip, bei der in einem prozessvorbereitenden Vorgang die Ventilstellung eingestellt wird und
- Fig. 3: eine mögliche Art der Regelung nach dem erfindungsgemäßen Prinzip, bei der in einem prozessvorbereitenden Vorgang unter Beachtung einer Weichenstellung eine Ventilstellung an Hand des Durchflusses eingestellt wird.

Eine typische Situation in der hohe Anforderungen an die Präzision der Schaltposition von Teilbreiten bei landwirtschaftlichen Verteilmaschinen gestellt werden, ist die Fahrt vom Vorgewende in das Feld hinein. Hierbei markiert das Vorgewende bei der streifenartigen Bearbeitung der landwirtschaftlichen Fläche den Bereich des Feldes, der zum Wenden der landwirtschaftlichen Maschine verwendet wird. Dieser Bereich erstreckt sich über die gesamte Länge des Feldes und hat typischerweise eine Breite, welche einem Vielfachen der Arbeitsbreite entspricht. Es ist jedoch auf Grund moderner Teilbreitenschaltungen auch ohne Einschränkung möglich Vorgewendebreiten zu verwenden, welche nicht einem ganzzahligen Vielfachen der Arbeitsbreite entsprechen. Um Unter- oder Überdüngungen, Unter- oder Überbehandlung mit Pflanzenschutzmitteln oder Fehlstellen bei der Saat zu vermeiden ist eine präzise Positionierung der Schaltpunkte der Teilbreiten, unter Berücksichtigung verschiedener Effekte, wie beispielsweise Anfahreffekten von Pumpen, Dauer von (Mengen-) Regelungsprozessen und Aufenthaltsdauer des landwirtschaftlichen Guts in Rohr- und/oder Schlauchleitungen

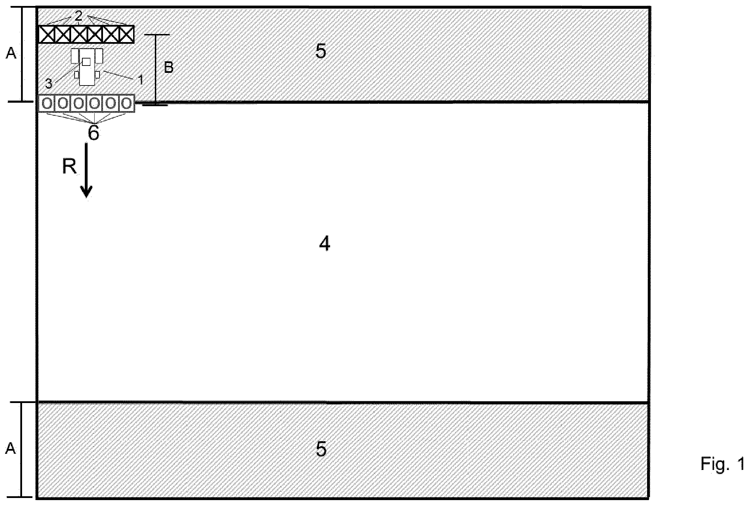

Eine typische Konstellation einer landwirtschaftlichen Verteilmaschine auf einer landwirtschaftlichen Fläche ist in Fig. 1 in schematischer Darstellung gezeigt, mit einer landwirtschaftlichen Maschine 1, bestehend aus einem Zugfahrzeug und einer angehängten Verteilmaschine, wobei es sich beispielsweise um eine Pflanzenschutzspritze, eine Sämaschine oder einen Düngerstreuer, jeweils sowohl als angehängte mit eigenem Fahrwerk oder angebaute Maschine ohne eigenes Fahrwerk handeln kann. Auch sind Kombinationen aus Zugfahrzeug und Verteilmaschine, sogenannte selbstfahrende Verteilmaschinen denkbar. Die Verteilmaschine ist in dieser schematischen Darstellung der Übersichtlichkeit wegen mit Hilfe von mehreren x dargestellt, welche gleichzeitig die individuellen, einzeln schaltbaren realen Teilbreiten 2 symbolisieren. Die landwirtschaftliche Maschine verfügt über einen Positionsgeber 3, welcher, wie hier dargestellt, auf der Zugmaschine, oder der Verteilmaschine angeordnet sein kann. Die landwirtschaftliche Maschine bewegt sich zum Zweck der Verteilung von landwirtschaftlichem Gut auf einer landwirtschaftlichen Fläche 4. Während der Bearbeitung soll ein Vorgewendebereich 5 der Breite A in festgelegter Art und Weise getrennt bearbeitet werden, also beispielsweise zu Beginn oder am Ende des Verteilvorganges, und ansonsten während der Bearbeitung von der Verteilung ausgespart bleiben. Jeder der realen Teilbreiten 2 ist eine virtuelle Teilbreite 6, markiert durch ein o, zugeordnet, welche sich in Fahrtrichtung R in einem festgelegten Abstand B vor den Teilbreiten 2 befindet. Es können auch mehrere schaltbare reale Teilbreiten zu Gruppen zusammengefasst sein, so dass im Extremfall mit nur einer einzigen realen Teilbreite der gesamte Verteilprozess aller realer Teilbreiten gestartet oder gestoppt wird. Der Abstand B ist in vorteilhafter Weise von der Geschwindigkeit abhängig, welche mittels des Positionsgebers 3 oder eines Geschwindigkeitsmessers der Zugmaschine oder der Verteilmaschine gemessen werden kann. Dies ermöglicht, die Zeit exakt einzustellen, welche gemessen von dem Passieren der virtuellen Teilbreiten eines Ortes bis zum Passieren der realen Teilbreiten desselben Ortes vergeht. Diese Zeit kann in vorteilhafter Weise an die für die jeweilige Verteilmaschine charakteristischen Zeitwerte für Anfahreffekte, Regelungsprozesse und Längen von Rohr- und/oder Schlauchleitungen angepasst sein. Alternativ kann sich die virtuelle Teilbreite auch an derselben Position, wie die reale Teilbreite befinden, aber mit einer Vorschauzeit versehen sein, welche die zuvor genannten Anfahr- und/oder Regelungsprozesse und/oder die Länge eines Leitungssystems berücksichtigt, so dass mit identischer Wirkung Verteilprozesse exakt gesteuert werden können. Die Vorschauzeit bewirkt in diesem Zusammenhang, dass Ereignisse, beispielsweise das Passieren einer Vorgewendegrenze durch die realen Teilbreiten, welche in Fahrtrichtung in einem Zeitraum, welcher der Vorschauzeit entspricht, zu erwarten ist, für Regelungsprozesse herangezogen werden können. Die Steuerung des Abstandes B in Abhängigkeit der Geschwindigkeit und/oder die Überprüfung möglicher Ereignisse in Abhängigkeit der Vorschauzeit und/oder die Ermittlung der für die Steuerung notwendigen Informationen, wie beispielsweise Geschwindigkeit und Position, können hierbei durch ein auf einer Zugmaschine sich befindliches Terminal oder ein auf der Zugmaschine oder der Verteilmaschine sich befindlichen Jobrechner erfolgen und auch zwischen den einzelnen Jobrechnern und/oder Terminals übermittelt werden. Die virtuellen Teilbreiten werden hierbei vorzugsweise dem Bedienpersonal der Verteilmaschine nicht auf einer Anzeigevorrichtung angezeigt, da diese nur zur Steuerung des Verteilprozesses dienen und ein Anzeigen beispielsweise potentiell zu Verwechslung der Position von virtuellen und realen Teilbreiten führen kann.

In Fig. 1 entspricht der Abstand zwischen realen und virtuellen Teilbreiten der Länge B. Bei der Fahrt aus dem Vorgewende wird in dem Moment, in dem die virtuellen Teilbreiten das Vorgewende verlassen ein prozessvorbereitender Vorgang gestartet. Dies kann beispielsweise bedeuten, dass der Verteilprozess vorzeitig in Gang gesetzt wird, in dem Wissen, dass ein gewisser Zeitraum vergeht, bis das landwirtschaftliche Gut Rohr- und/oder Schlauchleitungen passiert hat und auf der landwirtschaftlichen Fläche auftrifft. Idealerweise würde so in dem Moment, wenn die realen Teilbreiten das Vorgewende verlassen, das landwirtschaftliche Gut erstmals auf die landwirtschaftliche Fläche auftreffen. Alternativ können jedoch andere oder weitere prozessvorbereitende Vorgänge, beispielsweise Regelungsprozesse, gestartet werden, um den gewünschten Ort des Verteilbeginns exakt zu treffen. So vergehen bei einer typischen Mengenregelung typischerweise einige Sekunden zwischen dem Start eines Verteilprozesses und der exakten Einstellung der richtigen Verteilmenge. Ein denkbarer Prozessvorbereitender Vorgang könnte nun darin bestehen die richtige Verteilmenge frühzeitig, insbesondere rechtzeitig vor Erreichen des Startpunktes des Verteilprozesses, in Gang zu setzen ohne dabei bereits das landwirtschaftliche Gut auszubringen und stattdessen das Gut beispielsweise mittels einer Weiche in einen Tank zurückzuleiten. Das Schalten dieser Weiche ist im Vergleich zu der Regelung der Ausbringmenge ein erheblich schnellerer Vorgang, so dass sehr kurz vor dem Erreichen des eigentlichen Startpunktes des Verteilprozesses die Weiche umgeschaltet und der Verteilprozess präzise gestartet werden kann. Anschließend kann die Mengenregelung in bekannter Weise fortgeführt werden.

Zusätzlich verhindert dieser prozessvorbereitende Vorgang, dass über einen gewissen Zeitraum zu wenig landwirtschaftliches Gut ausgebracht würde. Hierbei ist eine Unterscheidung zu treffen zwischen Verzögerungen, welchen beispielsweise die Länge von Rohr-/ und Schlauchleitungen zu Grunde liegt und solchen, welchen Anfahr- und Regelungseffekten zu Grunde liegt. Bei letzteren gibt es zwar auch eine Verzögerung zwischen dem Zeitpunkt an dem der Verteilprozess gestartet und dem Zeitpunkt an dem das zu verteilende Gut auf die landwirtschaftliche Fläche auftrifft, allerdings wird bei letzterem bereits vorher eine gewisse jedoch im Allgemeinen zu geringe Menge landwirtschaftliches Gut ausgebracht. Dieses kann ausgeschlossen werden indem während eines prozessvorbereitenden Vorganges auf die gewünschte Verteilmenge geregelt wird, ohne dass das landwirtschaftliche Gut ausgebracht wird und in einem zweiten Schritt der Verteilprozess durch einen einfachen Schaltvorgang, beispielsweise das Schalten einer Weiche oder die Inbetriebnahme von Spritzdüsen, gestartet wird.

Prozessvorbereitende Vorgänge können also zum einen dadurch charakterisiert sein, dass der Verteilprozess so früh gestartet wird, dass Verzögerungen des Verteilprozesses, vorzugsweise hervorgerufen durch die Länge von Rohr- und Schlauchleitungen, bei der Wahl der Startposition des Verteilvorganges Berücksichtigung finden und/oder dadurch, dass Regelungs- und/oder Anfahrprozesse des Verteilvorganges derart berücksichtigt werden, dass der Verteilvorgang an der vorgesehenen Position zumindest annähernd mit der gewünschten Sollmenge gestartet wird.

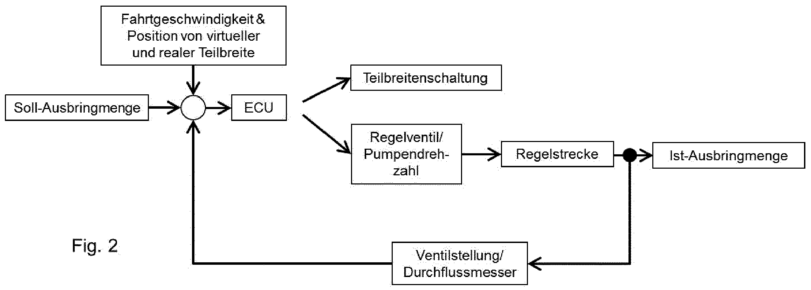

Ein Beispiel für einen prozessvorbereitenden Vorgang der letzteren Art ist in Fig. 2 dargestellt. Hierbei werden die Soll-Ausbringmenge, die Fahrtgeschwindigkeit, die Durchflussrate eines Durchflussmessers, welcher die tatsächlich ausgebrachte Menge und/oder Rate des zu verteilenden Guts erfasst, sowie die Position der virtuellen Teilbreiten berücksichtigt. Es ist zudem vorzugsweise die Position der realen Teilbreiten zur Berücksichtigung von Geschwindigkeitsvariationen, eines Vorgewendes und/oder die Position der landwirtschaftlichen Fläche hinterlegt. Soll der Verteilvorgang beispielsweise bei der Fahrt aus dem Vorgewende gestartet werden, so wird vor dem Erreichen dieser Position kein zu verteilendes Gut ausgebracht. Die für die Regelung notwendigen Information, also beispielsweise Positionsdaten, Soll-Ausbringmenge, Durchflussmenge und/oder Ventilstellung werden an ein Steuergerät (ECU) übergeben, welches entsprechend der empfangenen Daten Steuerbefehle an ein Regelventil übergibt und somit in der Regelstrecke die zu regelnde Stellgröße auf den gewünschten Wert einstellt. Das Regelventil steuert hierbei den Anteil /die Menge an auszubringendem Gut, welche zu den Teilbreiten bzw. über einen sogenannten Bypass zurück in den Vorratstank gelangt. Diese Regelung kann in diesem Beispiel nun an Hand zweier Parameter erfolgen. Zum einen kann, wie es bei einer typischen Mengenregelung durchgeführt wird, die Regelung der Regelventilstellung durch die mittels eines Durchflussmessers bestimmte Durchflussrate des zu verteilenden Guts zu den Teilbreiten hin erreicht werden. Ist nun die jeweilige Ventilstellung bestimmbar und zumindest annähernd die zu erwartende Durchflussrate bei eingestellter Ventilstellung bekannt, so kann in einem ersten prozessvorbereitenden Vorgang auf die zumindest annähernd korrekte Sollausbringmenge geregelt werden. Während dieses Prozesses sind im Allgemeinen die einzelnen Teilbreiten, beispielsweise Ausbringdüsen oder Säschare, geschlossen, beispielsweise bei der Fahrt aus einem Vorgewende, so dass kein landwirtschaftliches Gut ausgebracht wird. Während dieses Vorgangs fließt das landwirtschaftliche Gut beispielsweise über den Bypass zurück in den Vorratstank. Nach dem Einstellen der gewünschten Ventilstellung und damit der zumindest annähernd korrekten Ausbringmenge und dem positionsgenauen Öffnen der Teilbreiten durch das Steuergerät wird der Verteilprozess gestartet. Dies geschieht vorzugsweise unter Berücksichtigung der Länge des vorhandenen Rohr- und Schlauchleitungssystems. Anschließend wird das System in den gewöhnlichen Regelungsmodus überführt werden, der als Regelungsgröße die Durchflussrate in Richtung der Teilbreiten statt der Regelventilstellung verwendet. Die Regelung auf die Durchflussrate ermöglicht eine sehr viel exaktere Steuerung der Ausbringmenge, da unmittelbar die einzustellende Größe bestimmt wird. Der zuvor beschriebene erfindungsgemäße Vorgang ermöglicht nun einerseits, den Verteilvorgang rechtzeitig vor Erreichen der Position zu starten an der der Verteilprozess begonnen werden soll. Hierfür müssen die Verzögerungen hervorgerufen durch Rohr- und/oder Schlauchleitungen sowie der benötigte Zeitraum zum Anfahren der Ventilposition bekannt sein. Zusätzlich ist es durch zu Beginn des Verteilprozesses durchgeführte Regelung auf die Ventilstellung möglich den Verteilprozess quasi ohne Verzögerung annähernd sofort mit der gewünschten Ausbringrate zu starten.

Ein weiterer Aspekt in diesem Zusammenhang ist, dass die Regelung der Ventilstellung auch sehr viel zügiger erfolgen kann, da die Information über die eingestellte Ventilstellung sehr viel unmittelbarer erfolgt, beispielsweise auf Grund der angelegten Spannung, als die Einstellung einer Durchflussrate an Hand der Messung eines Durchflussmessers, was einen recht trägen Prozess darstellt. Dies kann beispielsweise genutzt werden, wenn bei einer Änderung der Ausbringmenge, ohne dass der Ausbringvorgang komplett gestoppt wird, schnell geregelt werden soll. Beispielsweise könnte bei der Fahrt in eine Keilfläche, wenn eine gewisse Anzahl an Teilbreiten geschlossen werden sollen, die Änderung der Ausbringmenge in einem ersten Schritt an Hand der Ventilstellung zumindest annähernd positionsgenau und mit gewünschter Mengenänderung durchgeführt werden während beispielsweise gleichzeitig die Teilbreiten geschlossen werden. Anschließend wird nach dem Erreichen der gewünschten Ventilstellung wieder in den normalen Regelungsmodus geschaltet, welcher sich an dem Durchflussmesser orientiert.

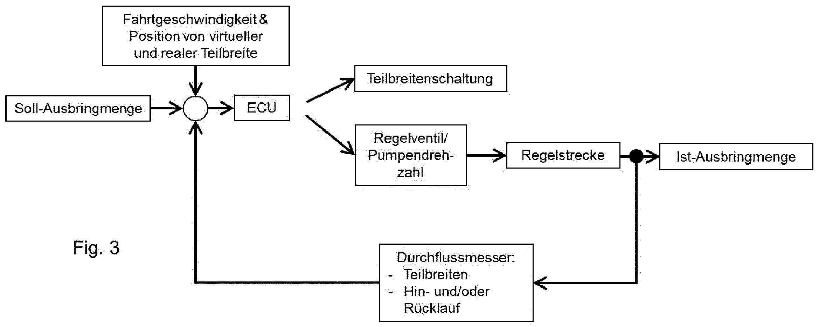

Eine weitere Möglichkeit eine derartige Regelung zu realisieren ist in Fig. 3 dargestellt. Wiederum werden verschiedene Daten, wie Soll-Ausbringmenge, Positionsdaten und Durchflussraten an ein Steuergerät übergeben. Für die Steuerung der Ist-Ausbringmenge werden nun Steuerungsdaten von dem Steuergerät vorzugsweise an ein Regelventil und/oder eine Pumpe übergeben. Um auch in diesem Beispiel positionsgenau die gewünschte Ausbringmenge dosieren zu können, wird im Rahmen eines prozessvorbereitenden Vorganges die gewünschte Ausbringmenge eingeregelt, während die Teilbreiten zur Ausbringung des landwirtschaftlichen Gutes noch geschlossen sind, das auszubringende Gut wird also an dem Regelventil teilweise in den Vorratstank zurückgeführt. Zur Regelung der Einstellung des Regelventils kann ein Durchflussmesser dienen, welcher vor dem Regelventil oder in der Bypassleitung zum Vorratstank hin angebracht ist. Beide Durchflussmesser würden in diesem Zustand den gleichen Wert messen, da über die alternative Leitung zu den Teilbreiten zu diesem Zeitpunkt kein landwirtschaftliches Gut ausgebracht wird. Erst bei oder kurz vor Erreichen der eigentlichen Startposition des Ausbringvorganges, beispielsweise kurz vor Verlassen des Vorgewendes, unter Berücksichtigung der Länge der vorhandenen Rohr- und/oder Schlauchleitungen werden die gewünschten Teilbreiten geöffnet, so dass das auszubringende Gut auf der landwirtschaftlichen Fläche beispielsweise mittels Säscharen oder Spritzdüsen ausgebracht werden kann. Alternativ können auch ein oder mehrere Durchflussmesser durch Druckmesssonden ersetzt werden und so bei bekanntem Querschnitt der entsprechenden Rohrleitungen der Durchfluss gemessen werden.

Zuvor beschriebene beispielhafte Ausgestaltungen können auch vorteilhaft kombiniert werden, so dass beispielsweise die Ausgestaltung nach Fig. 2 für die Mengenänderung bei teilweisem Öffnen oder Schließen von Teilbreiten Verwendung finden und die Ausgestaltung nach Fig. 3 beispielsweise wenn zuvor kein oder anschließend kein zu verteilendes Gut mehr ausgebracht wird, beispielsweise bei der Fahrt in ein Vorgewende oder dem Verlassen eines Vorgewendes.

Die zuvor beschriebenen Regelungsverfahren können für landwirtschaftliche Verteilmaschinen aller Art, vorzugsweise Düngerstreuer, Feldspritzen und Sämaschinen verwendet werden, wobei die Berücksichtigung der Länge von Rohr- und/oder Schlauchleitungen insbesondere bei Feldspritzen, Sämaschinen und pneumatischen Düngerstreuern Verwendung findet. Jedoch ist die Anwendung der Erfindung auch auf Schleuderstreuer anwendbar. So könnte beispielsweise in einem prozessvorbereitenden Vorgang zunächst auf der Basis einer hinterlegten Tabelle, eines hinterlegten Graphen und/oder einer Rechenvorschrift eine zu einer gewünschten Ausbringrate passende Stellung eines Dosierschiebers eingestellt werden. Nach dem Erreichen dieser Schieberstellung könnte dann der typische Regelungsmodus gestartet werden, in welchem an Hand der Ausbringrate die Schieberstellung fortwährend geregelt wird.

Auch ist die vorliegende Erfindung nicht auf zuvor beschriebene Regelungsmodi beschränkt, vielmehr wird allgemein ein System und Verfahren zur Verteilung von landwirtschaftlichem Gut beansprucht, welches sich einen prozessvorbereitenden Vorgang zu Nutze macht, während dessen vorzugsweise kein landwirtschaftliches Gut ausgebracht wird, um zumindest annähernd positionsgenau und zumindest annähernd mit der gewünschten Sollmenge das auszubringende Gut zu Verteilen. Dieses kann beispielsweise bei der Auffahrt und/oder dem Verlassen einer landwirtschaftlichen Fläche und/oder der Einfahrt in ein Vorgewende und/oder dem Verlassen eines Vorgewendes und/oder der Änderung der Arbeitsbreite, beispielsweise in Keilflächen einer landwirtschaftlichen Fläche, angewendet werden.

## Patentansprüche

1. System zur Steuerung einer Maschine (1) zur Verteilung von landwirtschaftlichem Gut aus einem Vorratsbehälter, vorzugsweise einer Feldspritze und/oder einer Sämaschine und/oder eines Düngerstreuers, und einer an der Maschine angeordneten Vorrichtung zur Durchführung eines prozessvorbereitenden Vorganges (2) zur Vorbereitung und/oder Einleitung des Verteilprozesses und/oder Änderung des Verteilprozesses, mit einem auf der landwirtschaftlichen Maschine und/oder einem ihr zugeordneten Zugfahrzeug angeordneten Jobrechner und/oder Terminal und einem auf dem Jobrechner und/oder dem Terminal gespeicherten Programm zur Steuerung der landwirtschaftlichen Maschine und einem elektronischen Standortbestimmungssystem (3), wobei das System zur Steuerung derart konfiguriert ist, dass in vorwählbarem Zeitabstand vor dem Erreichen einer festgelegten Position, welche vorzugsweise das Verlassen und/oder Befahren des Vorgewendes (5) und/oder das Verlassen und/oder Befahren des Feldes (4) und/oder eine Änderung der Teilbreitensteuerung markiert, ein Signal durch das auf dem Jobrechner und/oder dem Terminal gespeicherte Programm generiert wird, **dadurch gekennzeichnet, dass**
durch das Programm Teilbreiten nach dem Standard ISO 11783 als reale Teilbreiten (2) und virtuelle Teilbreiten (6) ermittelt werden, die virtuellen Teilbreiten (6) in einem festgelegten Abstand vor der Position der realen Teilbreite (2) der Maschine (1) platziert werden und der prozessvorbereitende Vorgang in Gang gesetzt wird, wenn eine virtuelle Teilbreite (2) eine Position während der Fahrt über die landwirtschaftliche Fläche passiert, an dem sich die Verteilcharakteristik ändert, so dass bei Erreichen der festgelegten Position durch die landwirtschaftliche Maschine (1) der Verteilprozess zumindest annähernd ohne Verzögerung gestartet und/oder geändert und/oder beendet wird.

2. System nach Anspruch 1, **dadurch gekennzeichnet, dass** während eines Regelungsvorganges als prozessvorbereitender Vorgang eine die Sollmenge und/oder Sollrate bestimmende Größe an Hand einer Eingangsgröße eingestellt wird, wobei letztere bei geschlossenem, zumindest einem Ausbringorgan zur Ausbringung des landwirtschaftlichen Guts ein Maß für die Ausbringmenge und/oder Ausbringrate nach Öffnen des zumindest einen Ausbringorgans darstellt.

3. System nach Anspruch 1 oder 2, **dadurch gekennzeichnet, dass** für die automatische Einstellung zumindest einer Dosiervorrichtung (2) als prozessvorbereitender Vorgang die Stellung der zumindest einen Dosiervorrichtung (2) elektronisch und/oder optisch und/oder mechanisch erfasst wird und an Hand der Stellung der zumindest einen Dosiervorrichtung (2) entsprechend einer hinterlegten Rechenvorschrift, eines Graphen und/oder einer Tabelle die Durchflussrate einer Stellung der zumindest einen Dosiervorrichtung (2) zugeordnet werden kann.

4. System nach zumindest einem der Ansprüche 1 bis 3, **dadurch gekennzeichnet, dass** zur Durchführung des prozessvorbereitenden Vorganges die automatische Einstellung zumindest einer Dosiervorrichtung (2) anhand der Messwerte zumindest eines Mengenzählers, vorzugsweise eines Durchflussmessers und/oder eines Körnerzählers, durchgeführt wird und das vorzeitige Ausbringen des Gutes verhindert wird, indem das Gut mittels zumindest einer schaltbaren Weiche nach Passieren des zumindest einen Mengenzählers in den Vorratsbehälter befördert wird.

5. System nach zumindest einem der Ansprüche 1 bis 4 für eine Feldspritze, **dadurch gekennzeichnet, dass** für zumindest eine spezifische Ventilstellung und damit Sollausbringmenge mittels einer Drucksonde im Flüssigkeitskreislauf zumindest ein Druck bei geschlossenen Düsen zur Ausbringung des Spritzmittels ermittelt wird, so dass zur Durchführung eines prozessvorbreitenden Vorganges das Ventil bei geschlossenen Düsen derart eingestellt wird, dass der zuvor ermittelte Druck bei geschlossenen Düsen erreicht wird und sich bei Öffnen der Düsen zumindest annähernd die entsprechende Sollausbringmenge automatisch einstellt.

6. Verfahren zur Steuerung einer Maschine (1) zur Verteilung von landwirtschaftlichem Gut aus einem Vorratsbehälter, vorzugsweise einer Feldspritze und/oder einer Sämaschine und/oder eines Düngerstreuers, und einer an der Maschine angeordneten Vorrichtung zur Durchführung eines prozessvorbereitenden Vorganges (2) zur Vorbereitung und/oder Einleitung des Verteilprozesses mit einem auf der landwirtschaftlichen Maschine und/oder einem ihr zugeordneten Zugfahrzeug angeordneten Jobrechner und/oder Terminal und einem auf dem Jobrechner und/oder dem Terminal gespeicherten Programm zur Steuerung der landwirtschaftlichen Maschine und einem elektronischen Standortbestimmungssystem (3), wobeiin vorwählbarem Zeitabstand vor dem Erreichen einer festgelegten Position, welche vorzugsweise das Verlassen und/oder Befahren des Vorgewendes (5) und/oder das Verlassen und/oder Befahren des Feldes (4) und/oder eine Änderung der Teilbreitensteuerung markiert, ein Signal durch das auf dem Jobrechner und/oder dem Terminal gespeicherte Programm generiert wird, **dadurch gekennzeichnet, dass** durch das Programm Teilbreiten nach dem Standard ISO 11783 als reale Teilbreiten (2) und virtuelle Teilbreiten (6) ermittelt werden, die virtuellen Teilbreiten (6) in einem festgelegten Abstand vor der Position der realen Teilbreite (2) der Maschine (1) platziert werden und der prozessvorbereitender Vorgang in Gang gesetzt wird, wenn eine virtuelle Teilbreite (2) eine Position während der Fahrt über die landwirtschaftliche Fläche passiert, an dem sich die Verteilcharakteristik ändert, so dass bei Erreichen der festgelegten Position durch die landwirtschaftliche Maschine (1) der Verteilprozess zumindest annähernd ohne Verzögerung gestartet und/oder geändert und/oder beendet wird.

7. Verfahren nach Anspruch 6, **dadurch gekennzeichnet**, während eines Regelungsvorganges als prozessvorbereitender Vorgang eine die Sollmenge und/oder Sollrate bestimmende Größe an Hand einer Eingangsgröße eingestellt wird, wobei letztere bei geschlossenem zumindest einem Ausbringorgan zur Ausbringung des landwirtschaftlichen Guts ein Maß für die Ausbringmenge und/oder Ausbringrate nach Öffnen des zumindest einen Ausbringorgans darstellt.

## Claims

1. System for controlling a machine (1) for distributing agricultural product from a storage container, preferably a field sprayer and/or a seed drill and/or a fertilizer spreader, and a device arranged on the machine for carrying out a process-preparing operation (2) for preparing and/or initiating the distribution process and/or altering the distribution process, with a job computer and/or terminal arranged on the agricultural machine and/or a tractor vehicle assigned to it and a program for controlling the agricultural machine stored on the job computer and/or the terminal and an electronic location determining system (3), wherein the controlling system is configured in such a way that, at a preselectable interval before reaching a fixed position, which preferably marks the leaving and/or entering of the headland (5) and/or the leaving and/or entering of the field (4) and/or an alteration of the partial width control, a signal is generated by the program stored on the job computer and/or the terminal, **characterized in that**
partial widths as defined by the standard ISO 11783 are determined by the program as actual partial widths (2) and virtual partial widths (6), the virtual partial widths (6) are placed at a fixed distance ahead of the position of the actual partial width (2) of the machine (1) and the process-preparing operation is launched when a virtual partial width (2) passes a position at which the distributing characteristics change while driving over the agricultural area, so that, when the fixed position is reached by the agricultural machine (1) the distribution process is started and/or altered and/or ended at least almost without delay.

2. System according to Claim 1, **characterized in that**, during a closed-loop control operation as a process-preparing operation, a variable determining the desired quantity and/or desired rate is set on the basis of an input variable, wherein the input variable represents a measure based on the closed at least one discharge element for discharging the agricultural product of the discharge quantity and/or discharge rate after opening the at least one discharge element.

3. System according to Claim 1 or 2, **characterized in that**, for the automatic setting of at least one metering device (2) as a process-preparing operation, the position of the at least one metering device (2) is detected electronically and/or optically and/or mechanically and, on the basis of the position of the at least one metering device (2), the flow rate can be assigned to a position of the at least one metering device (2) in accordance with a stored computing specification, a graph and/or a table.

4. System according to at least one of Claims 1 to 3, **characterized in that**, for carrying out the process-preparing operation, the automatic setting of at least one metering device (2) is carried out on the basis of the measured values of at least one quantity counter, preferably a flowmeter and/or a grain counter, and premature discharging of the product is prevented by the product being transported into the storage container by means of at least one switchable diverter after passing the at least one quantity counter.

5. System according to at least one of Claims 1 to 4 for a field sprayer, **characterized in that**, for at least one specific valve position, and consequently desired discharge quantity, at least one pressure is determined by means of a pressure probe in the liquid circuit with closed nozzles for discharging the spray, so that, for carrying out a process-preparing operation, with closed nozzles the valve is set in such a way that the previously determined pressure is reached with closed nozzles and the corresponding desired discharge quantity automatically sets itself at least approximately when the nozzles are opened.

6. Method for controlling a machine (1) for distributing agricultural product from a storage container, preferably a field sprayer and/or a seed drill and/or a fertilizer spreader, and a device arranged on the machine for carrying out a process-preparing operation (2) for preparing and/or initiating the distribution process, with a job computer and/or terminal arranged on the agricultural machine and/or a tractor vehicle assigned to it and a program for controlling the agricultural machine stored on the job computer and/or the terminal and an electronic location determining system (3), wherein, at a preselectable interval before reaching a fixed position, which preferably marks the leaving and/or entering of the headland (5) and/or the leaving and/or entering of the field (4) and/or an alteration of the partial width control, a signal is generated by the program stored on the job computer and/or the terminal, **characterized in that**
partial widths as defined by the standard ISO 11783 are determined by the program as actual partial widths (2) and virtual partial widths (6), the virtual partial widths (6) are placed at a fixed distance ahead of the position of the actual partial width (2) of the machine (1) and the process-preparing operation is launched when a virtual partial width (2) passes a position at which the distributing characteristics change while driving over the agricultural area, so that, when the fixed position is reached by the agricultural machine (1) the distribution process is started and/or altered and/or ended at least almost without delay.

7. Method according to Claim 6, **characterized in that**, during a closed-loop control operation as a process-preparing operation, a variable determining the desired quantity and/or desired rate is set on the basis of an input variable, wherein the input variable represents a measure based on the closed at least one discharge element for discharging the agricultural product of the discharge quantity and/or discharge rate after opening the at least one discharge element.

## Revendications

1. Système de commande d'une machine (1) de distribution de produit agricole provenant d'un réservoir, de préférence un pulvérisateur agricole et/ou un semoir et/ou un épandeur d'engrais, et d'un dispositif disposé sur la machine et destiné à effectuer une opération de préparation de processus (2) destinée à préparer et/ou lancer le processus de distribution et/ou modifier le processus de distribution, ledit système comprenant un ordinateur de travail et/ou un terminal, disposés sur la machine agricole et/ou un tracteur qui lui est associé, et un programme, mémorisé sur l'ordinateur de travail et/ou le terminal et destiné à commander la machine agricole, et un système de positionnement électronique (3), le système de commande étant conçu de manière à ce qu'un signal soit généré par le programme mémorisé sur l'ordinateur de travail et/ou le terminal à une distance temporelle présélectionnable avant qu'une position spécifiée ne soit atteinte, laquelle marque de préférence la sortie de la tournière (5) et/ou le passage sur celle-ci et/ou la sortie du champ (4) et/ou le passage sur celui-ci et/ou une modification de la commande de tronçon, **caractérisé en ce que**
des tronçons selon la norme ISO 11783 sont définis par le programme en tant que tronçons réels (2) et tronçons virtuels (6), les tronçons virtuels (6) sont placés à une distance spécifiée devant la position du tronçon réel (2) de la machine (1) et l'opération de préparation de processus est mise en œuvre lorsqu'un tronçon virtuel (2) passe par une position pendant le parcours de la surface agricole où la caractéristique de distribution change de sorte que, lorsque la position spécifiée est atteinte par la machine agricole {1), le processus de distribution est démarré et/ou modifié et/ou terminé au moins approximativement sans retard.

2. Système selon la revendication 1, **caractérisé en ce que**, lors d'une opération de régulation en tant qu'opération de préparation de processus, une grandeur déterminant la quantité cible et/ou le débit cible est réglée à l'aide d'une grandeur d'entrée, cette grandeur d'entrée étant une mesure de la quantité d'application et/ou du débit d'application après ouverture de l'au moins un élément d'application lorsque l'au moins un élément d'application est fermé pour appliquer le produit agricole.

3. Système selon la revendication 1 ou 2, **caractérisé en ce que** la position de l'au moins un dispositif de dosage (2) est détectée électroniquement et/ou optiquement et/ou mécaniquement pour effectuer le réglage automatique d'au moins un dispositif de dosage (2) en tant qu'opération de préparation de processus et, à l'aide de la position de l'au moins un dispositif de dosage (2), le débit peut être associé à une position de l'au moins un dispositif de dosage (2) selon une règle de calcul mémorisée, un graphique et/ou un tableau.

4. Système selon l'une au moins des revendications 1 à 3, **caractérisé en ce que** le réglage automatique d'au moins un dispositif de dosage (2) est effectué sur la base des valeurs de mesure d'au moins un compteur de quantité, de préférence un débitmètre et/ou un compteur de grains, pour réaliser l'opération de préparation de processus et l'application prématurée du produit est empêchée **en ce que** le produit est acheminé dans le réservoir au moyen d'au moins un aiguillage commutable après le passage par l'au moins un compteur de quantité.

5. Système selon l'une au moins des revendications 1 à 4 destiné à un pulvérisateur agricole, **caractérisé en ce que**, pour au moins une position de vanne spécifique et donc pour la quantité d'application cible, au moins une pression est déterminée à buses fermées pour l'application de l'agent de pulvérisation au moyen d'un capteur de pression dans le circuit de liquide de sorte que, pour réaliser une opération de préparation de processus, la vanne est réglée à buses fermées de telle sorte que la pression précédemment déterminée est atteinte à buses fermées et au moins approximativement le débit d'application cible correspondant est réglé automatiquement lorsque les buses sont ouvertes.

6. Procédé de commande d'une machine (1) de distribution de produit agricole provenant d'un réservoir, de préférence un pulvérisateur agricole et/ou un semoir et/ou un épandeur d'engrais, et d'un dispositif disposé sur la machine et destiné à réaliser une opération de préparation de processus (2) destinée à préparer et/ou lancer le processus de distribution à l'aide d'un ordinateur de travail et/ou d'un terminal, disposés sur la machine agricole et/ou un tracteur qui lui est associé, et d'un programme, mémorisé sur l'ordinateur de travail et/ou le terminal et destiné à commander la machine agricole, et d'un système de positionnement électronique (3), un signal étant généré par le programme mémorisé sur l'ordinateur de travail et/ou le terminal à une distance temporelle présélectionnable avant qu'une position spécifiée ne soit atteinte, laquelle marque de préférence la sortie de la tournière (5) et/ou le passage sur celle-ci et/ou la sortie du champ (4) et/ou le passage sur celui-ci et/ou une modification de la commande de tronçon, **caractérisé en ce que**
des tronçons selon la norme ISO 11783 sont définis par le programme en tant que tronçons réels (2) et tronçons virtuels (6), les tronçons virtuels (6) sont placés à une distance spécifiée devant la position du tronçon réel (2) de la machine (1) et l'opération de préparation de processus est mise en œuvre lorsqu'un tronçon virtuel (2) passe par une position pendant le parcours de la surface agricole où la caractéristique de distribution change de sorte que, lorsque la position spécifiée est atteinte par la machine agricole {1), le processus de distribution est démarré et/ou modifié et/ou terminé au moins approximativement sans retard.

7. Procédé selon la revendication 6, **caractérisé en ce que**, lors d'une opération de régulation en tant qu'opération de préparation de processus, une grandeur déterminant la quantité cible et/ou le débit cible est réglée à l'aide d'une grandeur d'entrée, cette grandeur d'entrée étant une mesure de la quantité d'application et/ou du débit d'application après ouverture de l'au moins un élément d'application lorsque l'au moins un élément d'application est fermé pour appliquer le produit agricole.
